# FASCICULE DE BREVET EUROPEEN

(11) **EP 1 792 484 B1**
(45) Date de publication et mention de la délivrance du brevet: **01.04.2009**
(21) Numéro de dépôt: 05792127.2
(22) Date de dépôt: 15.09.2005
(51) Int. Cl.: H04N 7/16, H04N 7/167

(54) **PROCÉDÉ DE GESTION DE MOYENS D'ACCÈS À DES DONNÉES À ACCÈS CONDITIONNEL**
VERFAHREN ZUR VERWALTUNG VON MITTELN ZUM ZUGRIFF AUF DATEN MIT BEDINGTEM ZUGANG
METHOD FOR MANAGING MEANS FOR ACCESSING CONDITIONAL ACCESS DATA

(30) Priorité: 17.09.2004 EP 04104509
(43) Date de publication de la demande: 06.06.2007
(73) Titulaire: Nagravision SA, 1033 Cheseaux-sur-Lausanne (CH)
(72) Inventeur: DUVAL, Grégory, CH-1093 La Conversion (CH)
(74) Mandataire: Leman Consulting S.A.
(86) Numéro de dépôt international: PCT/EP2005/054586
(87) Numéro de publication internationale: WO 2006/030021

(56) Documents cités:
- EP-A- 1 109 405
- US-A1- 2004 123 313
- "FUNCTIONAL MODEL OF A CONDITIONAL ACCESS SYSTEM" EBU REVIEW- TECHNICAL, EUROPEAN BROADCASTING UNION. BRUSSELS, BE, no. 266, 21 décembre 1995 (1995-12-21), pages 64-77, XP000559450 ISSN: 0251-0936
- CARDUCCI F ET AL: "ISIS project: an open platform for multimedia interactive services" ., 13 mars 1997 (1997-03-13), pages 6-1, XP006509347

## Description

### DOMAINE DE L'INVENTION

La présente invention concerne un procédé de gestion de moyens d'accès à des données à accès conditionnel, ces données étant diffusées notamment par satellite, par un réseau d'antennes terrestres ou par câble à destination d'au moins une unité multimédia. Ces données peuvent notamment être des données de télévision à péage.

Elle concerne plus particulièrement la gestion des moyens d'accès à des données lorsque cet accès se fait par le biais d'une unité multimédia liée à un abonnement ayant une durée de validité fixée ou une durée de validité régulièrement renouvelable.

### ART ANTERIEUR

Les conditions de validité pour l'accès à des services de télévision à péage au moyen d'une unité multimédia sont mémorisées dans un module de sécurité. De façon bien connue de l'homme du métier, le module de sécurité peut être réalisé essentiellement selon quatre formes distinctes. L'une d'elles est une carte à microprocesseur, une carte à puce, ou plus généralement un module électronique (ayant une forme de clé, de badge,...). Un tel module est généralement amovible et connectable au décodeur. La forme avec contacts électriques est la plus utilisée, mais n'exclut pas une liaison sans contact par exemple de type ISO 14443.

Une deuxième forme connue est celle d'un boîtier de circuit intégré placé, généralement de façon définitive et inamovible dans le boîtier du décodeur. Une variante est constituée d'un circuit monté sur un socle ou connecteur tel qu'un connecteur de module SIM.

Dans une troisième forme, le module de sécurité est intégré dans un boîtier de circuit intégré ayant également une autre fonction, par exemple dans un module de désembrouillage du décodeur ou le microprocesseur du décodeur.

Dans une quatrième forme de réalisation, le module de sécurité n'est pas réalisé sous forme matérielle, mais sa fonction est mise en oeuvre sous forme uniquement logicielle. Etant donné que dans les quatre cas, bien que le niveau de sécurité diffère, la fonction est identique, on parlera de module de sécurité quelle que soit la manière de réaliser sa fonction ou la forme que peut prendre ce module.

Les conditions d'accès aux services de télévision à péage tels que mentionnés précédemment peuvent être une durée ou un crédit par example. Un tel système est décrit dans le document EP 1109 405A. Dans le cas d'un abonnement ayant une durée déterminée, en particulier lorsque cette durée est relativement longue, par exemple une année, il n'est pas souhaitable d'introduire dans le module de sécurité, des droits ou des moyens d'accès pour la totalité de la durée de l'abonnement. Au contraire, il est préférable d'introduire des droits ou des moyens d'accès pour une fraction seulement de la durée totale. A titre d'exemple, pour un abonnement d'une durée d'un an, on pourra introduire des droits pour un mois. Il est clair qu'avant l'expiration de la durée partielle, il est nécessaire de renouveler les droits ou les moyens d'accès pour les unités multimédia concernées.

Le fait d'introduire les droits ou les moyens d'accès relatifs à un abonnement de façon fractionnée, permet d'éviter qu'un abonné résilie ses droits après un temps d'utilisation relativement court et qu'il s'arrange, par exemple en éteignant sont unité multimédia pendant un certain temps, pour que cette unité multimédia ne reçoive pas les messages de résiliation des droits qui lui sont destinés. Il est à noter que sous le terme "moyens d'accès" tel qu'utilisé dans la description ci-dessous est englobé aussi bien les droits d'accès c'est-à-dire les droits dont il est nécessaire de disposer pour pouvoir déchiffrer les données, que les clés nécessaires au déchiffrement des données. Les clés mentionnées ici peuvent servir à déchiffrer directement les données ou plus généralement à les déchiffrer de manière indirecte. Cela signifie que la clé en question permet de déchiffrer un message, par exemple un message de contrôle ECM, qui contient lui-même des clés, par exemple sous la forme de mots de contrôle, permettant le déchiffrement des donnés.

Il existe également des modules de sécurité, généralement amovibles, qui donnent droit à l'accès à un événement pendant une durée prédéfinie et qui nécessite la réception d'un message de renouvellement de droits pour continuer à recevoir des événements ou du contenu. Ainsi un tel module donne une durée d'accès à des événements de 6 mois mais pour des raisons de sécurité, il est nécessaire de recevoir un message de confirmation de droit (ou prolongation de droit) tous les 30 jours. Avec ce type de module, le centre de gestion n'est pas en mesure de savoir à quelle date le message de renouvellement doit être envoyé. En effet, la date de prolongation dépend de la date à laquelle l'utilisateur a activé initialement son module de sécurité.

Avec les systèmes existants, chaque fois que la durée de validité partielle associée à une unité multimédia arrive à échéance, le centre de gestion doit envoyer un message de renouvellement des moyens d'accès. Ces messages sont envoyés sous la forme de messages d'autorisation EMM.

Un problème se pose avec ce type de messages. En effet, de nombreuses unités multimédia ne sont en mesure de traiter ces messages d'autorisation que lorsqu'elles sont actives, c'est-à-dire lorsqu'elles ne sont ni éteintes, ni en mode veille.

Pour garantir que la majorité des unités multimédia a bien reçu un message d'autorisation qui la concerne, il est nécessaire de répéter de nombreuses fois l'envoi d'un tel message. Ceci utilise de façon peu optimale la bande passante disponible. De plus, le fait que les voies de retour par modem existant actuellement entre les unités multimédia et le centre de gestion sont peu commodes, notamment parce que le modem doit être connecté à proximité de l'unité multimédia, il n'y a généralement pas de moyens prévus pour indiquer au centre de gestion quelles unités multimédia ont bien reçu le message de renouvellement des droits.

Un autre problème se pose lorsqu'une unité multimédia n'est pas utilisée pendant la période pendant laquelle les messages de renouvellement sont envoyés. Cette unité multimédia n'ayant pas reçu les moyens d'accès nécessaires, elle ne pourra plus fonctionner. Ceci oblige l'abonné à appeler un centre de gestion afin que les messages d'autorisation lui soit envoyé spécifiquement.

Les moyens existants ne permettent pas une gestion optimale des messages de renouvellement, impliquent une mauvaise utilisation des ressources et sont peu commodes pour l'utilisateur en cas de non-usage pendant un certain temps.

La présente invention se propose de pallier les inconvénients des procédés de l'art antérieur en réalisant un procédé dans lequel il n'est pas nécessaire de répéter de nombreuses fois des messages inutiles et dans lequel la gestion des messages d'autorisation est donc optimisée.

### BREVE DESCRIPTION DE L'INVENTION

Le but de l'invention est atteint par un procédé de gestion de moyens d'accès à des données à accès conditionnel, ces données étant diffusées à destination d'au moins une unité multimédia, les moyens d'accès étant gérés par un centre de gestion, ces moyens d'accès étant liés à une information temporelle,
ladite unité multimédia comportant au moins un module de sécurité dans lequel sont mémorisés les moyens d'accès aux données;
ladite unité multimédia comportant en outre des moyens de communication distants avec le centre de gestion, et des moyens
de communication locaux avec ledit module de sécurité; **caractérisé en ce qu**'il comporte les étapes de :
- détermination par le module de sécurité, de la prochaine échéance de renouvellement des moyens d'accès;
- si la prochaine échéance de renouvellement des moyens d'accès est plus proche qu'une durée prédéfinie, envoi par le module de sécurité d'une requête à l'unité multimédia, demandant le renouvellement des moyens d'accès, cette requête utilisant lesdits moyens de communication locaux;
- envoi par l'unité multimédia de ladite requête de renouvellement des moyens d'accès au centre de gestion, cette requête utilisant lesdits moyens de communication distants;
- vérification par le centre de gestion, si ladite unité multimédia est autorisée à renouveler les moyens d'accès;
- en cas de réponse positive, envoi à ladite unité multimédia d'un message de renouvellement desdits moyens d'accès.

Selon cette invention, la demande de messages de renouvellement des moyens d'accès est gérée par l'unité multimédia elle-même et en particulier par le module de sécurité qu'elle contient. Ce dernier gère le moment auquel la requête est envoyée de sorte qu'il est possible de s'arranger pour que le message de renouvellement soit envoyé lorsque l'unité multimédia a de bonnes chances d'être en fonction. L'unité multimédia est également en mesure d'envoyer un message de quittance indiquant au centre de gestion que le message de renouvellement a été bien reçu. Ceci évite que le centre de gestion envoie des messages de renouvellement inutiles.

Il est également possible de diffuser de façon conventionnelle, des messages de renouvellement des moyens d'accès lorsque la durée de validité pour un groupe d'unités multimédia arrive à échéance, par exemple quelques jours avant la fin d'un mois. Le procédé de l'invention peut ensuite être utilisé pour envoyer un message de confirmation au centre de gestion. Il est alors possible de n'envoyer des messages de renouvellement des droits, en utilisant le procédé de l'invention, qu'aux unités multimédia qui n'ont pas reçu ces messages de façon conventionnelle. Ceci permet d'assurer non seulement que le centre de gestion n'envoie pas de nombreux messages inutiles, mais encore que les unités multimédia fonctionnent même après une période de non utilisation prolongée.

### BREVE DESCRIPTION DES FIGURES

La présente invention et ses avantages seront mieux compris en référence aux figures annexées et à la description détaillée d'un mode de réalisation particulier, dans lesquelles :

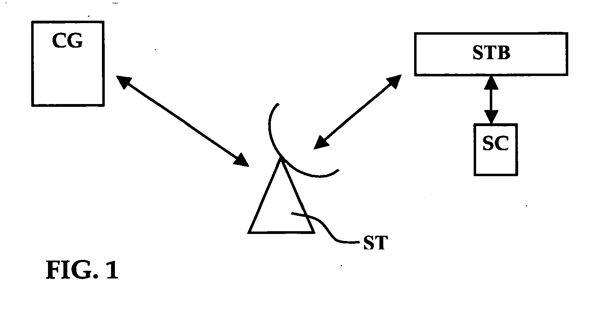

- la figure 1 illustre les éléments permettant la mise en oeuvre du procédé de l'invention; et
- la figure 2 représente schématiquement les étapes du procédé de l'invention.

### DESCRIPTION DETAILLEE

En référence à ces figures, le procédé selon l'invention est mis en oeuvre au moyen d'un système comportant essentiellement trois entités, à savoir un centre de gestion CG liés à un fournisseur de données à accès conditionnel, une unité multimédia STB utilisant lesdites données à accès conditionnel et des moyens de communication distants ST entre le centre de gestion et l'unité multimédia. Les moyens de communication distants peuvent utiliser un satellite de télécommunication capable de communiquer de façon bidirectionnelle aussi bien avec le centre de gestion CG qu'avec les unités multimédia STB en liaison avec ce satellite. Ces moyens de communication peuvent également utiliser un réseau d'antennes terrestres et transmettre des données conformément aux normes DVB-T (Digital Video Broadcasting - Terrestrial ou Diffusion vidéo numérique terrestre) ou DVB-H (Digital Video Broadcasting - Handheld ou Diffusion vidéo numérique - application portable). D'une manière générale, les événements sont transmis aux unités multimédia en mode diffusion (c'est-à-dire que le même contenu est envoyé à un grand nombre d'unités) alors que la voie de retour est généralement une voie point-à-point. Dans ce cas, la voie de communication en retour pourra utiliser un modem conventionnel ou une communication conforme à la norme GSM (Global System for Mobile Communications) ou GPRS (General Packet Radio Service) ou une autre norme similaire. Les moyens de communication distants peuvent également utiliser un réseau de câbles.

Dans le mode de réalisation préféré de l'invention, l'accès aux données est lié à des droits ou des moyens d'accès acquis sous la forme d'un abonnement. Dans la description ci-dessous, il est supposé que l'abonnement a une durée totale d'une année et que les droits sont introduits de façon fractionnée dans le temps, pour une durée d'un mois par exemple. De façon conventionnelle, ces droits sont mémorisés dans un module de sécurité SC lié à l'unité multimédia.

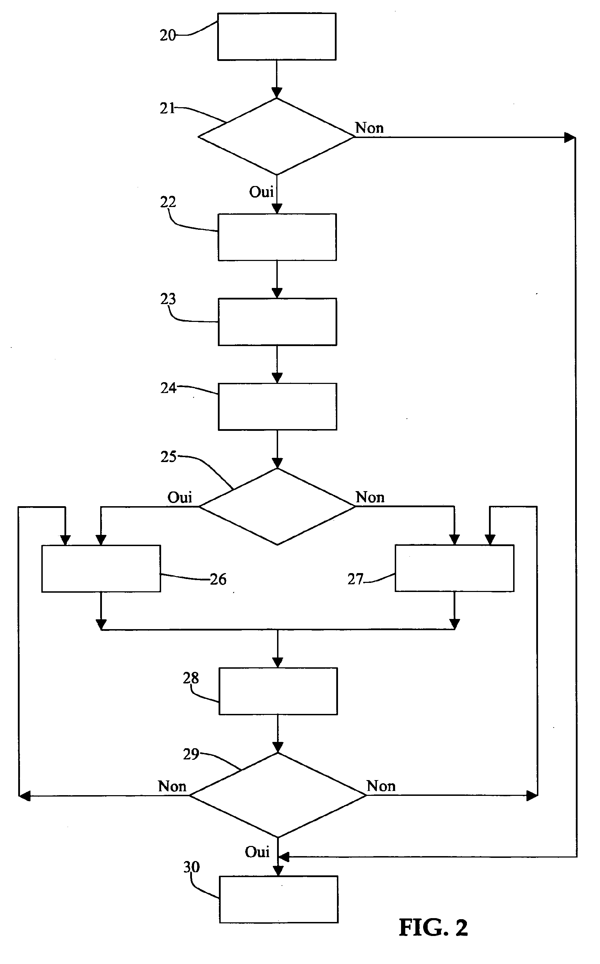

Le procédé de l'invention fonctionne de la manière suivante, en référence à la figure 2. En fonction de critères prédéfinis, par exemple lorsque l'unité multimédia est enclenchée après une pause, cette unité vérifie si elle dispose encore des droits ou des moyens d'accès pour accéder à des données. En cas de réponse positive, elle vérifie ensuite quand est-ce que les droits fractionnés arrivent à échéance. Ceci correspond à l'étape portant la référence 20. Elle compare ensuite, lors d'une étape 21, la durée jusqu'à la prochaine échéance de renouvellement des moyens d'accès avec une valeur de seuil prédéfinie, correspondant par exemple à 48 heures. Si la comparaison indique que la prochaine échéance de renouvellement est plus éloignée que cette valeur de seuil, l'unité multimédia fonctionne de façon conventionnelle. Si par contre, la comparaison indique que l'échéance de renouvellement est plus proche que la valeur de seuil, une requête de renouvellement est formée.

Dans un premier temps, une requête est formée par le module de sécurité qui la transmet à l'unité multimédia par les moyens de communication locaux. Ceci correspond à l'étape 22. Cette requête est ensuite relayée au centre de gestion, éventuellement après modification, traitement et mise en forme par l'unité multimédia. Cette étape porte la référence 23. Pour ceci, l'unité multimédia utilise les moyens de communication distants bidirectionnels passant par le satellite de télécommunication, une antenne du réseau d'antennes terrestres ou un câble. Cette requête contient au moins un identifiant de l'unité multimédia émettrice et un élément d'authentification. L'identifiant est avantageusement envoyé en clair pour que le centre de gestion puisse déterminer l'origine du message. Cet identifiant pourrait toutefois également être chiffré au moyen d'une clé commune à toutes les unités multimédia liées au centre de gestion. L'élément d'authentification est de préférence chiffré au moyen d'une clé connue du centre de gestion et de l'unité multimédia. Cette clé est avantageusement spécifique à chaque unité multimédia. Elle peut être symétrique ou asymétrique. Cet élément d'authentification pourrait être l'identifiant chiffré. De cette manière, lorsque le centre de gestion reçoit un message, l'identifiant en clair permet de connaître l'origine du message, ce qui permet de déterminer, par exemple dans une table de clés mémorisée dans le centre de gestion, quelle clé correspond à l'unité multimédia émettrice. Si l'élément d'authentification correspond à l'identifiant chiffré, l'identifiant en clair est alors chiffré dans le centre de gestion au moyen de la clé correspondante et comparé à l'élément d'authentification reçu par les moyens de communication distants. Il est clair que d'autres procédures d'authentification peuvent également être utilisées, par exemple au moyen de fonctions de hachage. Cette authentification correspond à l'étape 24 sur la figure 2.

Lorsque le centre de gestion a identifié et authentifié l'unité multimédia ayant émis la requête, il vérifie ensuite, lors d'une étape 25, les droits associés à cette unité multimédia. Ces droits sont mémorisés dans une base de données du centre de gestion et indiquent la durée totale de l'abonnement ainsi que la durée partielle ou fractionnée et éventuellement la date à partir de laquelle le renouvellement fractionné peut être effectué. Si les conditions pour le renouvellement sont remplies, c'est-à-dire en particulier si la durée totale de l'abonnement n'est pas arrivée à échéance, les nouveaux moyens d'accès peuvent être transmis lors d'une étape 26 à l'unité multimédia qui en a fait la demande.

Ces moyens d'accès peuvent être envoyés de deux manières distinctes. Selon l'une d'elles, ils sont insérés dans le flux des données diffusées à l'attention de toutes les unités. Ce type de message peut être encrypté selon une clé globale ou par une clé spécifique à l'unité multimédia concernée (plus particulièrement, à son module de sécurité) L'unité multimédia concernée est seule en mesure de traiter le ou les messages de façon à en extraire les moyens d'accès, c'est-à-dire les droits ou les clés notamment.

Selon une deuxième manière, les moyens d'accès sont envoyés en utilisant la liaison point à point qui est formée entre l'unité multimédia et le satellite, une antenne du réseau d'antennes terrestres ou le câble. Ainsi, seule l'unité multimédia concernée reçoit de façon individuelle, les messages d'autorisation requis.

Lorsque les messages d'autorisation EMM contenant les moyens d'accès ont été reçus par l'unité multimédia, ils sont transmis au module de sécurité par les moyens de communication locaux éventuellement après traitement par l'unité multimédia. Ils sont ensuite mémorisés dans ce module de sécurité.

Si les conditions de renouvellement ne sont pas remplies, c'est-à-dire que l'unité multimédia qui a émis la requête ne dispose plus des droits pour renouveler son abonnement, deux modes de réalisation distincts sont envisageables. Selon l'un des modes, le centre de gestion n'envoie rien à l'unité multimédia. Selon un autre mode, illustré par la référence 27, le centre de gestion envoie un message d'inhibition à l'unité multimédia émettrice. Ce message, qui est également transmis par les moyens de communication distants, a pour fonction d'empêcher l'unité multimédia de renvoyer un message de renouvellement alors qu'un tel renouvellement n'est de toute façon plus autorisé. Cela évite l'envoi de messages inutiles. Il est également possible d'envoyer à l'abonné, un message lui proposant de renouveler son abonnement et/ou expliquant la manière de procéder.

Selon un mode de réalisation avantageux, lorsque l'unité multimédia a reçu un message, que ce soit un message de renouvellement ou un message d'inhibition, et a été capable de le traiter correctement, elle informe le centre de gestion de ce fait. Pour ceci, elle envoie un message de confirmation, lors d'une étape 28, en utilisant les mêmes voies de communication que pour l'envoi de la requête. Si le centre de gestion a reçu le message de confirmation, ce qui est testé lors d'une étape 29, le procédé s'arrête, ce qui correspond à l'étape 30, et l'accès aux données se fait de manière conventionnelle. Si le message de confirmation n'est pas reçu, le message est répété jusqu'à ce qu'une confirmation soit envoyée. Ce message peut être le message de renouvellement des moyens d'accès ou le message d'inhibition. L'envoi d'un tel message de confirmation permet d'éviter que le centre de gestion répète de nombreuses fois l'envoi de messages qui ont déjà été reçus.

La présente invention comporte plusieurs avantages par rapport aux procédés de l'art antérieur. En effet, le fait de confier la gestion de l'envoi des messages de renouvellement à l'unité multimédia et non au centre de gestion permet d'aboutir à un taux de réussite dans la réception des messages de renouvellement considérablement plus grand que dans les systèmes de l'art antérieur. En effet, il est possible de forcer l'unité multimédia à vérifier la prochaine date d'échéance de renouvellement lors de chacune de ses mises en service. Si un message de renouvellement est envoyé peut de temps après cette mise en service, il y a de fortes chances qu'il puisse être traité. En effet, l'unité multimédia sera certainement encore en fonction. En outre, comme la majorité des messages sont traités correctement, l'utilisation des moyens de communication bidirectionnels permettent de détecter uniquement les messages qui n'ont pas été bien reçus. Ceci évite l'envoi d'un grand nombre de messages inutiles.

## Revendications

1. Procédé de gestion de moyens d'accès à des données à accès conditionnel, ces données étant diffusées à destination d'au moins une unité multimédia, les moyens d'accès étant gérés par un centre de gestion, ces moyens d'accès étant liés à une information temporelle,
ladite unité multimédia comportant au moins un module de sécurité dans lequel sont mémorisés les moyens d'accès aux données;
ladite unité multimédia comportant en outre des moyens de communication distants avec le centre de gestion et des moyens
de communication locaux avec ledit module de sécurité; **caractérisé en ce qu'**il comporte les étapes de :
- détermination par le module de sécurité, de la prochaine échéance de renouvellement des moyens d'accès;
- si la prochaine échéance de renouvellement des moyens d'accès est plus proche qu'une durée prédéfinie, envoi par le module de sécurité d'une requête à l'unité multimédia, demandant le renouvellement des moyens d'accès, cette requête utilisant lesdits moyens de communication locaux;
- envoi par l'unité multimédia de ladite requête de renouvellement des moyens d'accès au centre de gestion, cette requête utilisant lesdits moyens de communication distants;
- vérification par le centre de gestion, si ladite unité multimédia est autorisée à renouveler les moyens d'accès;
- en cas de réponse positive, envoi à ladite unité multimédia d'un message de renouvellement desdits moyens d'accès.

2. Procédé de gestion de moyens d'accès selon la revendication 1, **caractérisé en ce** lesdits moyens d'accès sont des droits liés à l'accès audites données.

3. Procédé de gestion de moyens d'accès selon la revendication 1, **caractérisé en ce** lesdits moyens d'accès comportent au moins une clé permettant le déchiffrement desdites données.

4. Procédé de gestion de moyens d'accès selon l'une quelconque des revendications 1 à 3, **caractérisé en ce qu'**il comporte une étape d'envoi d'un message d'inhibition ayant pour objet d'empêcher l'unité multimédia d'envoyer une nouvelle requête de renouvellement des moyens d'accès, cette étape étant effectuée lorsque l'étape de vérification des moyens d'accès par le centre de gestion a indiqué que ladite unité multimédia n'est pas autorisée à renouveler les moyens d'accès.

5. Procédé de gestion de moyens d'accès selon l'une quelconque des revendications 1 à 4, **caractérisé en ce que** ladite requête de renouvellement des moyens d'accès contient au moins un identifiant de ladite unité multimédia ayant émis cette requête.

6. Procédé de gestion de moyens d'accès selon l'une quelconque des revendications 1 à 5, **caractérisé en ce que** ladite requête de renouvellement des moyens d'accès contient au moins un élément d'authentification permettant d'authentifier ladite unité multimédia ayant émis cette requête.

7. Procédé de gestion de moyens d'accès selon l'une quelconque des revendications 1 à 6, **caractérisé en ce que** ladite unité multimédia envoie un message de confirmation audit centre de gestion par les moyens de communication distants lorsque cette unité multimédia a reçu le message de renouvellement des moyens d'accès, et **en ce que** le centre de gestion répète l'envoi du message de renouvellement des moyens d'accès jusqu'à ce qu'il ait reçu ledit message de confirmation.

8. Procédé de gestion de moyens d'accès selon l'une quelconque des revendications 1 à 7, **caractérisé en ce que** lesdites données sont diffusées par satellite et **en ce que** lesdits moyens de communication distants avec le centre de gestion utilisent ledit satellite.

## Claims

1. Access means management method for conditional access data, this data being broadcast to at least one multimedia unit, the access means being controlled by a management centre, and these access means being associated to a time information,
said multimedia unit comprising at least one security module in which the access means to data are stored;
said multimedia unit also including remote communication means with the management centre and local communication means with said security module;
**characterized in that** it includes the steps of:
- determination by the security module, of the next renewal date of the access means;
- if the next renewal date of the access means is closer than a preset duration, sending by the security module of a request to the multimedia unit, requesting the renewal of the access means, this request using said local communication means;
- sending by the multimedia unit of said request for renewal of the access means to the management centre, this request using said remote communication means;
- verification by the management centre, if said multimedia unit is authorized to renew the access means;
- in the case of a positive response, sending to said multimedia unit of an access means renewal message.

2. Access means management method according to claim 1, **characterized in that** said access means are rights connected to the access to said data.

3. Access means management method according to claim 1, **characterized in that** said access means include at least one key allowing the deciphering of said data.

4. Access means management method according to any of the claims 1 to 3, **characterized in that** it includes a step of sending of an inhibitory message with the aim of preventing the multimedia unit from sending a new access means renewal request, this step being carried out when the verification step of the access means by the management centre has indicated that said multimedia unit is not authorized to renew the access means.

5. Access means management method according to any of the claims 1 to 4, **characterized in that** said access means renewal request contains at least one identifier of said multimedia unit having issued this request.

6. Access means management method according to any of the claims 1 to 5, **characterized in that** said access means renewal request contains at least one authentication element allowing the authentication of said multimedia unit having issued this request.

7. Access means management method according to any of the claims 1 to 6, **characterized in that** said multimedia unit sends a confirmation message to said management centre by the remote communication means when this multimedia unit has received the access means renewal message, and **in that** the management centre repeats the sending of the access means renewal message until it has received said confirmation message.

8. Access means management method according to any of the claims 1 to 7, **characterized in that** said data is broadcast by satellite and **in that** said remote communication means with the management centre use said satellite.

## Patentansprüche

1. Verfahren der Verwaltung von Mitteln des Zugriffs zu Daten mit bedingtem Zugriff, wobei diese Daten an die Adresse zumindest einer Multimedieneinheit zu senden sind, die Mittel des Zugriffs von einem Verwaltungszentrum verwaltet werden und diese Mittel des Zugriffs an zeitliche Daten gebunden sind,
die Multimedieneinheit zumindest einen Sicherheitsmodul aufweist, in dem die Mittel des Zugriffs zu den Daten gespeichert sind;
die Multimedieneinheit ausserdem Mittel für eine Fernverbindung mit dem Verwaltungszentrum sowie Mittel für eine Lokalverbindung mit dem Sicherheitsmodul aufweist;
**dadurch gekennzeichnet, dass** es die Schritte aufweist:
- durch den Sicherheitsmodul den nächsten Erneuerungstermin für die Mittel des Zugriffs zu bestimmen;
- durch den Sicherheitsmodul ein Ansuchen an die Multimedieneinheit zu richten, in der die Erneuerung der Mittel des Zugriffs verlangt wird, wenn der nächste Erneuerungstermin der Mittel des Zugriffs näher als eine im Voraus definierte Zeit liegt, wobei für dieses Ansuchen die Mittel der Lokalverbindung verwendet werden;
- dieses Ansuchen für eine Erneuerung der Mittel des Zugriffs durch die Multimedieneinheit an das Verwaltungszentrum zu richten, wobei für dieses Ansuchen die Mittel der Fernverbindung verwendet werden;
- durch das Verwaltungszentrum zu überprüfen, ob diese Multimedieneinheit befugt ist, die Mittel des Zugriffs zu erneuern;
- bei einer positiven Antwort eine Nachricht für die Erneuerung der Mittel des Zugriffs an das Multimedienzentrum zu senden.

2. Verfahren der Verwaltung von Mitteln des Zugriffs nach Anspruch 1, **dadurch gekennzeichnet, dass** die Mittel des Zugriffs Rechte sind, die an den Zugriff auf diese Daten gebunden sind.

3. Verfahren der Verwaltung von Mitteln des Zugriffs nach Anspruch 1, **dadurch gekennzeichnet, dass** die Mittel des Zugriffs zumindest einen Schlüssel aufweisen, der die Entschlüsselung dieser Daten erlaubt.

4. Verfahren der Verwaltung von Mitteln des Zugriffs nach einem der Ansprüche 1 bis 3, **dadurch gekennzeichnet, dass** es einen Schritt aufweist, eine Verbotsnachricht zu senden, die den Zweck hat, die Multimedieneinheit daran zu hindern, ein neues Ansuchen auf Erneuerung der Mittel des Zugriffs zu senden, wenn dieser Schritt, der bei der Überprüfung der Mittel des Zugriffs durch das Verwaltungszentrum ausgeführt wurde, ergeben hat, dass die Multimedieneinheit nicht berechtigt ist, die Mittel des Zugriffs zu erneuern.

5. Verfahren der Verwaltung von Mitteln des Zugriffs nach einem der Ansprüche 1 bis 4, **dadurch gekennzeichnet, dass** das Ansuchen auf Erneuerung der Mittel des Zugriffs zumindest eine Kennung der Multimedieneinheit enthält, die dieses Ansuchen gestellt hat.

6. Verfahren der Verwaltung von Mitteln des Zugriffs nach einem der Ansprüche 1 bis 5, **dadurch gekennzeichnet, dass** das Ansuchen auf Erneuerung der Mittel des Zugriffs zumindest ein Element der Authentifizierung enthält, die es gestattet, die Multimedieneinheit zu authentifizieren, die dieses Ansuchen gestellt hat.

7. Verfahren der Verwaltung von Mitteln des Zugriffs nach einem der Ansprüche 1 bis 6, **dadurch gekennzeichnet, dass** die Multimedieneinheit eine Bestätigungsnachricht über die Mittel der Fernverbindung an das Verwaltungszentrum richtet, wenn diese Multimedieneinheit die Nachricht über die Erneuerung der Mittel des Zugriffs erhalten hat, und **dadurch**, dass das Verwaltungszentrum die Sendung der Nachricht über die Erneuerung der Mittel des Zugriffs wiederholt, bis es die Bestätigungsnachricht empfangen hat.

8. Verfahren der Verwaltung von Mitteln des Zugriffs nach einem der Ansprüche 1 bis 7, **dadurch gekennzeichnet, dass** die Daten über Satelliten übertragen werden, und **dadurch**, dass die Mittel der Fernverbindung mit dem Verwaltungszentrum diesen Satelliten benutzen.
